# EUROPEAN PATENT SPECIFICATION

(11) **EP 2 176 589 B1**
(45) Date of publication and mention of the grant of the patent: **13.07.2016**
(21) Application number: 08786883.2
(22) Date of filing: 05.08.2008
(51) Int. Cl.: F23D 1/00, F23D 14/78

(54) **BURNER**
BRENNER
BRÛLEUR

(30) Priority: 06.08.2007 EP 07113841; 07.08.2007 US 954332 P
(43) Date of publication of application: 21.04.2010
(73) Proprietor: Shell Internationale Research Maatschappij B.V., 2596 HR The Hague (NL)
(72) Inventor: BOER, Anne, NL-1031 CM Amsterdam (NL); VAN SCHIE, Henricus Gijsbertus, NL-1031 CM Amsterdam (NL)
(74) Representative: Matthezing, Robert Maarten
(86) International application number: PCT/EP2008/060275
(87) International publication number: WO 2009/019270

(56) References cited:
- EP-A- 0 108 427
- GB-A- 1 027 041
- US-A1- 2003 056 439
- US-A1- 2004 067 461

## Description

The invention relates to a burner comprising a central channel and at least one coaxial channel surrounding the central channel, the channels leading from an upstream supply side to a downstream discharge end for the supply of separate flows of co-reactive gaseous or gas-carried media to a combustion zone. The burner is particularly suitable for use in the partial combustion of carbonaceous fuels, such as finely divided solid fuel carried by a gas carrier, e.g., pulverized coal carried by a gas carrier such as nitrogen gas and/or carbon dioxide, using an oxygen-containing gas, e.g., for producing pressurized synthesis gas, fuel gas or reducing gas.

Partial combustion, also known as gasification, of a solid carbonaceous fuel is obtained by the reaction of the fuel with oxygen. The fuel mainly contains carbon and hydrogen as combustible components. The gas-carried finely divided carbonaceous fuel and the oxygen-containing gas are passed via the separate channels in the burner into a reactor at relatively high velocity. In the reactor a flame is maintained in which the fuel reacts with the oxygen in the oxygen-containing gas at temperatures above 1300 °C to form mainly carbon monoxide and hydrogen.

The term "oxygen-containing gas" as used herein is intended to refer to gas containing free oxygen, O₂, and to include air, oxygen-enriched air, i.e., more than 21 mole% oxygen, and also substantially pure oxygen, i.e., more than about 95 mole% oxygen, with the remainder comprising gases normally found in air such as nitrogen, and/or rare gases.

The term "solid carbonaceous fuel" as used herein is intended to include various gas carried combustible materials and mixtures thereof from the group of coal, coke from coal, coal liquefaction residues, petroleum coke, soot, biomass, and particulate solids derived from oil shale, tar sands and pitch. The coal may be of any type, including lignite, sub-bituminous, bituminous and anthracite. The solid carbonaceous fuels are preferably ground to a particle size so that at least about 90% by weight of the material is less than 90 microns and moisture content is less than about five per cent weight.

US-A-2003/0056439 describes a burner for producing synthesis gas made from a high melting metal alloy. US-A-2004/0067461 describes a burner having means to create a swirl of gas as it passes the burner.

US 4,887,962 discloses a burner for such a partial combustion process. The burner comprises a central channel with an outlet for supplying the fuel to the combustion zone, and a coaxial annular channel with an outlet surrounding the central channel outlet to supply an oxygen containing gas intersecting and mixing with the flow of solid fuel from the outlet of the central channel. The burner further comprises a front face disposed at the discharge end of the burner. The front face has a central aperture through which the fuel and the oxygen containing gas flow to the combustion zone. Approaching the outlet, the diameter of the annular channel supplying the oxygen containing gas decreases resulting in an angle with respect to the longitudinal axis. The thus obtained inclining annular slit should be stably dimensioned in order to obtain a constant and evenly distributed flow of oxygen containing gas. Due to the inclination of the annular slit in flow direction, the issuing gas flow will intersect and mix with the flow of co-reactive combustible material issuing from the central channel into the downstream combustion zone. Spacers are used to symmetrically space the channels with respect to each other and to hold them in stable alignment with minimal obstruction to the free flow of the reactant materials.

The flow of carbonaceous fuel typically has a temperature of 80 °C, whereas the flow of oxygen-containing gas typically has a temperature of about 300 - 350 °C. The temperature in the combustion zone can be as high as 1300 °C or higher. The burner is at one end exposed to near ambient conditions and at its discharge end it is exposed to the conditions of the combustion zone. As a result different thermal stress expansions of the various parts of the burner will take place. Due to the longitudinal length of the burner, which generally varies between 1,5 to 2,5 meters, the difference in expansion between the various parts can have a noticeable impact on the width of the annular slit and, as a result, on the outflow of the oxygen-containing gas.

The coaxial channel is generally provided with a lateral inlet for the gas to be transported. This results in a gas flow unevenly distributed over the coaxial channel, which may also have an impact on the outflow of the oxygen-containing gas.

It is an object of the present invention to provide a burner construction allowing a more constant and stable outflow of the gas components.

The object of the invention is achieved by the following burner. A burner comprising a central channel and at least one coaxial channel surrounding the central channel, the channels leading from a upstream supply side to a downstream discharge end, the central channel and the coaxial channel being defined by concentric inner and outer walls having free downstream outer ends profiled to define an annular slit forming a discharge end of the coaxial channel and converging towards an adjacent discharge end of the central channel wherein a connection block intersects at least the coaxial channel, the block bridging the outer and inner walls and being provided with one or more openings in line with the corresponding channel parts at both sides of the block and wherein the connection block intersects the inner and outer wall dividing both walls in two parts and wherein for both walls the two parts are joint to the connection block in line with each other.

Applicants found that the connection block stabilizes the dimensions of the annular slit by limiting the difference in thermal expansion of the outer and inner walls. In addition the block reduces fibrations and it has an equalizing effect on the gas flow resulting in an even gas flow over the full perimeter of the coaxial channel.

The connection block connects the upstream part of the burner to its downstream part. The term "upstream part" as used herein refers to the flow direction of the gas flows in the burner and is intended to refer to burner parts between the supply and the block, whereas the term "downstream" refers to the part of the burner between the block and the discharge end.

The flow-through openings can, e.g., be circular openings, evenly distributed over the perimeter of the coaxial channel. Alternatively, the flow-through openings can have a different shape, e.g., slits. The edges of the openings can for example be chamfered or rounded. In flow direction, the flow-through openings can be parallel to the longitudinal axis of the central channel or they can be under an angle with it in tangential and/or the axial direction.

The connection block can intersect the inner and outer wall dividing both walls in two parts which are joint to the connection block in line with each other, thus allowing a modular set up of the burner. The downstream wall parts will be exposed to higher temperatures and more temperature changes than the upstream parts at the other side of the connection block. In this construction, these heavily exposed downstream parts can be replaced independently.

The inner wall defining the central channel can for example have a constant diameter. Optionally, the inner wall can be tapered over part of its length.

To protect the burner from overheating, burners are generally cooled using a coolant, such as water, flowing over the outer wall via cooling jackets. The cooling jackets can comprise two coaxial jacket channels in open connection with each other near the discharge end, while at their other end one of the jacket channels is connected to a coolant supply and the other jacket channel is connected to a coolant discharge. In a particular embodiment of the present invention, the connection block intersects both jacket channels and is provided with flow-through openings for the coolant flow.

The radial width of the flow-through openings can for example be equal to the radial width of the coaxial channel or somewhat smaller, e.g., between 85 - 100% of the radial channel width or even less if so desired.

The distance between the outer end of the inner wall and the downstream side of the connection block can for example be about 1 to 3 times the diameter of the connection block.

In a particular embodiment, one or both of the sides of the connection block are provided with one or more concentric protrusions in a stepwise configuration, each of a diameter corresponding to one of the concentric walls attached to the connection block, to allow a welder easier access during assembling.

The present burner is well suited to introduce the reactants in any desired manner, i.e., vertically, horizontally or under an angle, into the reaction zone of a partial oxidation gas generator, and is particularly suited for use in solid fuel gasification apparatus having a plurality of burners for the reactants positioned on substantially opposite sides of the combustion zone, whereby the reactants are introduced horizontally and the burner jets impinge on each other to facilitate the partial oxidation process and to minimize erosion of the wall of the combustion zone.

Since the combustion temperatures may reach 1300 °C or more, a primary concern of such burners is to prevent damage to the burner front, also referred to as the burner face, caused by the high heat flux during the gasification process. To protect the burner front from overheating, a refractory lining can be applied to the outer surface of the burner front wall and/or preferably a hollow wall member can be used with internal cooling passages through which fluid coolant is circulated at a rapid rate along a particular flow path to assure even cooling of the burner front face so as to minimize thermal stresses which could cause deterioration and even failure of the burner during prolonged operation. More preferably the flow path is a spiral flow path, e.g., as described in US 4,887,962. Such a spiral flow path can for example be obtained by concentric baffles defining concentric flow path sections in open communication with each other via interruptions in the baffles, while cross partitions lead the passing flow via an interruption to pass to a next concentric flow path section.

Optionally, to allow a more modular set up, the burner can be built by welding one side of the connection block to the outer ends of the coaxially positioned upstream parts of the inner and outer walls. The downstream parts of the inner wall and of the outer wall can be mounted or welded to the second side of the connection block in line with the corresponding upstream parts. To build the cooling jackets after welding the upstream part of the outer wall to the connection block, two surrounding casings can be welded to the connection block to form two concentric compartments in line with two concentric circular arrays of openings in the connection block.

To complete the cooling channel circuitry, a double walled cylindrical body can be used with the outer of its double walls leaving the upstream edge of the inner wall uncovered over the full perimeter, the body being capped by a front face at its downstream side, the front face having an edge defining a central opening and adjoining the edge of the outer wall. The space between double walls of the cylindrical body is in open connection with one of the upstream cooling jacket compartments and - near the opening in the front face - with the space it encloses around the outer channel wall, this space, in turn, being in open connection with the other upstream cooling jacket compartment. This creates a gap between the outer wall and the connection block, allowing easier access for a welder welding the inner wall to the connection block. After welding the inner of the cylindrical body's double walls to the connection block, an annular cover plate, divided in at least two separate C-shaped parts is welded to the connection block and the cylindrical body to close the gap between the outer of the double walls and the connection block.

The burner will ordinarily be fabricated of high temperature resistant materials, particularly high temperature resistant metals and alloys such as sold under the trademark Inconel® and be fabricated, e.g., by welding, brazing or the like. For high duty operations the channels and outlets for oxygen-containing gas, which are usually made of metal, may be internally coated with an oxidic coating, such as ZrO₂, or a ceramic, enabling the application of high flow velocities of the oxygen-containing gas without the risk of metal combustion by the oxygen.

The invention will now be described in more detail, by way of example only, with reference to the accompanying drawings, wherein:
Figure 1 shows a longitudinal cross section of the front part of a burner according to the invention;
Figure 2 shows in plan view a connection block of the burner in Figure 1; and
Figure 3 shows a cross section of the connection block of the burner in Figure 1.

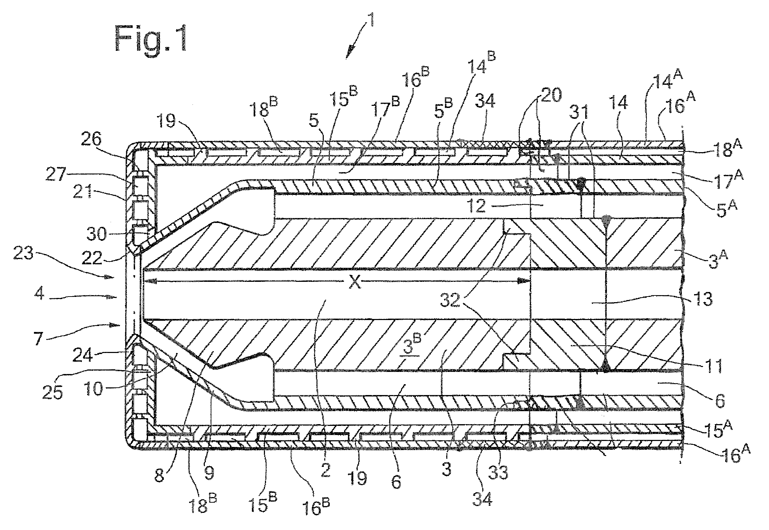

Figure 1 shows a burner 1 for the partial combustion of a carbonaceous fuel, such as pulverized coal carried on nitrogen or carbon dioxide gas. The burner 1 comprises a central channel 2. The central channel 2 is defined by a cylindrical inner wall 3 with an upstream part 3A and a downstream part 3B. The central channel 2 has a discharge outlet 4 for supplying the gas-carried fuel to a combustion zone.

Concentrically arranged around the inner wall 3 is a cylindrical outer wall 5 having an upstream part 5A and a downstream part 5B. The inner and outer wall 3, 5 define an annular coaxial channel 6 for supplying an oxygen containing gas. The coaxial channel 6 has an open discharge end 7 forming an outlet for the oxygen containing gas flow into the combustion zone.

The inner wall 3 has a constant inner diameter. The downstream inner wall part 3B has a bulging part 8 with a conically expanding and subsequently declining outer diameter towards the discharge outlet 4 so as to form an annular bulge with, in this particular example, a triangular cross section. The downstream outer wall part 5B forms a cylinder with a conical end 9 in the direction of the combustion zone. The annular bulge 8 of the inner wall part 3B and the conical end 9 of the outer wall part 5B define an annular slit 10 of even width and wherein bulge 8 has a diameter decreasing in the direction of the discharge outlet 4. This annular slit 10 forms the discharge outlet 7 of the coaxial channel 6.

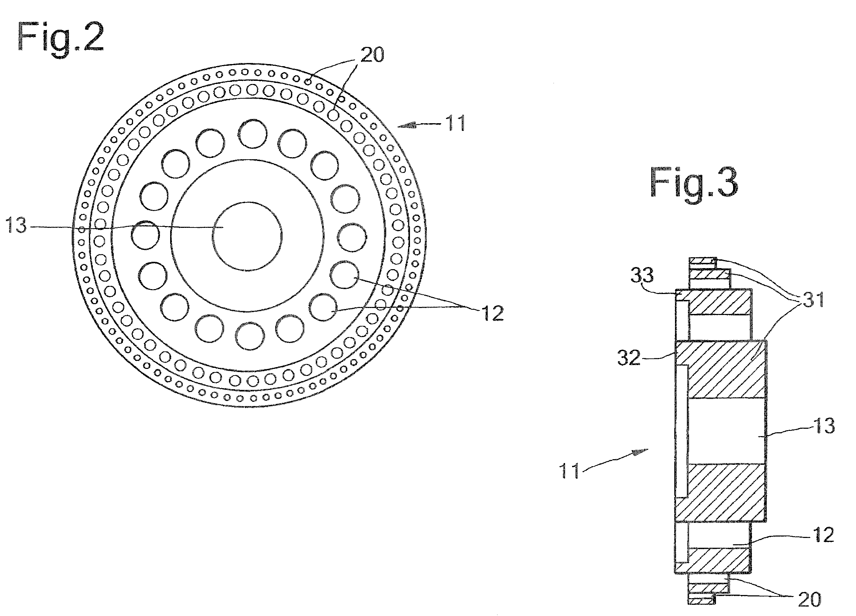

The upstream parts of the inner and outer walls 3A, 5A are welded to a connection block 11 in line with their corresponding downstream parts 3B, 5B. The connection block 11 is shown in plan view in Figure 2 and in cross section in Figure 3.

The connection block 11 is provided with flow-through openings 12 for the coaxial channel 6, and a central opening 13 forming part of the central channel 2 and wherein opening 13 has the same inner diameter as the inner wall parts 3A and 3B. The distance X between the downstream surface of the block 11 and the outer downstream end of the inner wall part 3B is between 1 and 3 times the diameter of the connecting block 11.

The coaxial channel 6 is encased by a cooling jacket 14 with an upstream part 14A at the upstream side of the connection block 11 and a downstream part 14B at the downstream part of the connection block 11. Two coaxial casings 15A, 16A are welded to the upstream side of connection block 11 to form two coaxial compartments, inner compartment 17A, and outer compartment 18A.

Similarly, the downstream part 14B of the cooling jacket 14 forms a double walled cylindrical body comprising an inner jacket wall 15B, forming the downstream extension of upstream inner casing 15A, and an outer jacket wall 16B, forming the downstream extension of casing 16A. The space 18B between the jacket walls 15B, 16B forms the downstream extension of the upstream cooling jacket compartment 18A and is divided by baffles 19 into spiral channels. The space 17B between inner jacket wall 15B and the outer wall part 5B forms the downstream extension of the upstream inner compartment 17A. The connection block 11 is provided with two concentric circular arrays of openings 20 connecting the upstream cooling jacket compartments 17A, 18A with the downstream cooling jacket compartments 17B, 18B respectively.

Downstream the double walled cylindrical body 14B, a double walled front face 21 is disposed under right angles with the cooling jacket walls 15B, 16B. The front face 21 has an inner edge 22 defining a central opening 23 and adjoining the outer edge of the coaxial channels outer wall 5B.

The double walled front face 21 has a downstream front wall 24 and a back side wall 25 spaced by concentric baffles 26 defining concentric flow path sections 27. Each of the flow path sections 27 is blocked by a partition bridging an inner and an outer baffle 26 just after an interruption in the inner baffle (not shown). This way, the baffles 26 define a spiral flow path. This flow path is in open connection with downstream cooling jacket compartment 18B. Near the opening 23 in the front face 21, the coolant flow path sections 27 between the front and back side wall 24, 25 of the front face 21 is in open connection with the downstream cooling jacket compartment 17B via an opening 30 in the front face back side wall 25.

The upstream inner cooling jacket compartment 17A is connected to a supply of a liquid coolant. The coolant flows from the inner cooling jacket compartment 17A, via openings 20 in block 11, downstream compartment 17B, opening 30, flow path sections 27 in front face 21, outer cooling jacket compartment 18B, openings 20 in block 11, and outer compartment 18A to a coolant discharge.

The upstream side of the connection block 11 is provided with concentric step-like protrusions 31, each of a diameter corresponding to one of the coaxial upstream wall parts 3A, 5A attached to the connection block 11. The downstream side of the connection block 11 is provided with circular rims 32, 33 having an outer diameter corresponding to the outer diameter of the respective downstream wall part 3B, 5B to be attached to the connection block 11.

Near the connection block 11, the inner wall 15B of the double walled cylindrical body 14B projects relative to the outer wall 16B leaving the upstream edge of the inner wall 15B uncovered over the full perimeter. This creates a circumferential gap allowing access for a welder to weld the inner wall 15B to the connection block 11. After welding the inner wall 15B to the connection block 11, an annular cover plate in two separate C-shaped ring segments 34 is welded to the connection block 11 and the cylindrical body 14B to close the gap.

The burner 1 of Figure 1 is essentially cylindrical. The block 11 is a circular block with a diameter corresponding to the outer diameter of the cooling jacket. As shown in Figure 2, the arrays of openings 12, 20 each form a circular arrangement concentric with the central opening 13.

During operation of the above described burner for the gasification of carbonaceous fuel, e.g., pulverized coal by means of oxygen-containing gas, said coal suspended in a carrier fluid, such as, e.g., nitrogen or carbon dioxide, is passed through the central channel to outlet for introducing the coal into the combustion zone of a reactor arranged downstream of the burner. Simultaneously, oxygen-containing gas is passed through annular channel to outlet so that the coal and oxygen-containing gas reactants will be intensively mixed in the reactor space. The mixing of the reactants can be further promoted by a swirling motion imparted to one or both streams by a swirl body of baffles in the appropriate channel. To promote stable outflow of coal the cross sectional area available for the coal flow should be kept constant over at least part of central channel of the burner near the outlet.

## Claims

1. A burner (1) comprising a central channel (2) and at least one coaxial channel (6) surrounding the central channel,
the channels leading from a upstream supply side to a downstream discharge end, the central channel (2) and the coaxial channel (6) being defined by concentric inner and outer walls (3, 5) having free downstream outer ends profiled to define an annular slit (10) forming a discharge end of the coaxial channel (6) and converging towards an adjacent discharge end of the central channel (2),
wherein a connection block (11) intersects at least the coaxial channel (6), the block (11) bridging the outer and inner walls (3, 5) and being provided with one or more openings (12) in line with the corresponding channel parts at both sides of the block (11) and
**characterized in that** the connection block (11) intersects the inner and outer wall (3, 5) dividing both walls in two parts (3A, 3B; 5A, 5B) and wherein for both walls the two parts are joint to the connection block (11) in line with each other.

2. Burner according to claim 1, wherein the outer wall (5) is encased by a cooling jacket (14) and wherein the connection block (11) extends over the width of the cooling jacket leaving flow-through openings (20) for the coolant flow.

3. Burner according to claim 2, wherein the cooling jacket (14) comprise two coaxial jacket compartments (17A, 18A) in open connection with each other near the discharge end, while at their other end one of the jacket compartments (17A) is connected to a coolant supply and the other compartment (18A) is connected to a coolant discharge and wherein the connection block (11) intersects both jacket compartments (17A, 18A) and is provided with flow-through openings (20) for the coolant flow.

4. Burner according to any one of the preceding claims, wherein the distance between the outer end of the inner wall (3) and the downstream side of the connection block (11) is about 1 to 3 times the diameter of the connection block (11).

5. Burner according to any one of the preceding claims, wherein at least one of the sides of the connection block is provided with one or more concentric protrusions (31) in a stepwise configuration, each of a diameter corresponding to one of the concentric walls (3A, 5A) attached to the connection block (11).

6. Burner according to any one of the preceding claims, wherein at least one side of the connection block (11) is provided with one or more circular rims (32, 33) forming a close fit with the outer diameter of a cylindrical part (3B, 5B) to be attached to the connection block (11).

7. Process for the construction of a burner (1) comprising a central channel (2) and at least one coaxial channel (6) surrounding the central channel (2),
the channels (2, 6) leading from an upstream supply side to a downstream discharge end,
the central channel (2) and the coaxial channel (6) being defined by concentric inner and outer walls (3, 5) having free downstream outer ends profiled to define an annular slit (10) forming a discharge end of the coaxial channel (6) and converging towards an adjacent discharge end of the central channel (2),
a connection block (11) being provided with a central opening (13) arranged to be in line with the central channel (2) and a circular array of openings (12) arranged to be in line with the coaxial channel (6),
**characterized in that** one side of the connection block (11) is welded to the outer ends of the coaxially positioned upstream parts of the inner and outer walls (3A, 5A), and **in that** the downstream parts of the inner wall (3B) and, subsequently, of the outer wall (5B) are welded to the second side of the connection block (11) in line with the corresponding upstream parts.

8. Process according to claim 7, wherein after welding the upstream part of the outer wall (5A) to the connection block (11), two surrounding casings (15A, 16A) are welded to the block to form two concentric compartments (17A, 18A) of a cooling jacket (14), the connection block (11) being provided with two concentric circular arrays of openings (20) in line with the cooling jacket compartments (17A, 18A).

9. Process according to claim 8, wherein downstream cooling jacket compartments (17B, 18B) are provided by a double walled cylindrical body (14B) with the outer of its double walls (16B) leaving the upstream edge of the inner wall (15B) uncovered over the full perimeter, the body (14B) being capped by a front face (21) at its downstream side, the front face (21) having a an edge (22) defining a central opening (23) and adjoining the edge of the outer wall (5), wherein the space (18B) between double walls (15B, 16B) of the cylindrical body (14B) is in open connection with one of the upstream cooling jacket compartments (18A) and, near the opening (23) in the front face (21), with the space (17B) it encloses around the outer channel wall (5B), the space (17B), in turn, being in open connection with the other upstream cooling jacket compartment (17A), and wherein after welding the inner of the cylindrical body's double walls (15B) to the connection block (11), an annular cover plate in at least two separate C-shaped parts (34) is welded to the connection block (11) and to the cylindrical body (14B) to close the gap between the outer of the double walls and the connection block (11).

## Patentansprüche

1. Brenner (1), der einen mittigen Kanal (2) und mindestens einen koaxialen Kanal (6), welcher den mittigen Kanal umgibt, aufweist,
wobei die Kanäle von einer stromaufwärtigen Zufuhrseite zu einem stromabwärtigen Austrittsende führen, wobei der mittige Kanal (2) und der koaxiale Kanal (6) durch eine innere und eine äußere konzentrische Wand (3, 5) definiert werden, welche freie stromabwärtige äußere Enden aufweisen, die profiliert sind, um einen ringförmigen Schlitz (10) zu definieren, der ein Austrittsende des koaxialen Kanals (6) bildet und in Richtung eines benachbarten Austrittsendes des mittigen Kanals (2) konvergiert,
wobei ein Verbindungsblock (11) mindestens den koaxialen Kanal (6) kreuzt, wobei der Block (11) die äußere und die innere Wand (3, 5) überbrückt und mit einer oder mehreren Öffnungen (12) versehen ist, die mit den entsprechenden Kanalteilen auf beiden Seiten des Blocks (11) in einer Linie sind, und
**dadurch gekennzeichnet, dass** der Verbindungsblock (11) die innere und die äußere Wand (3, 5) kreuzt und beide Wände in zwei Teile (3A, 3B; 5A, 5B) teilt, und wobei bei beiden Wänden die beiden Teile in einer Linie miteinander mit dem Verbindungsblock (11) verbunden sind.

2. Brenner nach Anspruch 1, wobei die äußere Wand (5) von einem Kühlmantel (14) umgeben ist und wobei sich der Verbindungsblock (11) über die Breite des Kühlmantels erstreckt und Durchströmöffnungen (20) für den Kühlmittelstrom freilässt.

3. Brenner nach Anspruch 2, wobei der Kühlmantel (14) zwei koaxiale Mantelkammern (17A, 18A) in offener Verbindung miteinander nahe dem Austrittsende aufweist, während an deren anderem Ende eine der Mantelkammern (17A) mit einer Kühlmittelzufuhr verbunden ist und die andere Kammer (18A) mit einem Kühlmittelausgang verbunden ist, und wobei der Verbindungsblock (11) beide Mantelkammern (17A, 18A) kreuzt und mit Durchströmöffnungen (20) für den Kühlmittelstrom versehen ist.

4. Brenner nach einem beliebigen der vorhergehenden Ansprüche, wobei der Abstand zwischen dem äußeren Ende der inneren Wand (3) und der stromabwärtigen Seite des Verbindungsblocks (11) etwa das Ein- bis Dreifache des Durchmessers des Verbindungsblocks (11) ist.

5. Brenner nach einem beliebigen der vorhergehenden Ansprüche, wobei mindestens eine der Seiten des Verbindungsblocks mit einem oder mehreren konzentrischen Vorsprüngen (31) in einer stufenartigen Ausgestaltung versehen ist, welche jeweils einen Durchmesser aufweisen, der einer der konzentrischen Wände (3A, 5A) entspricht, die an dem Verbindungsblock (11) befestigt sind.

6. Brenner nach einem beliebigen der vorhergehenden Ansprüche, wobei mindestens eine Seite des Verbindungsblocks (11) mit einem oder mehreren kreisförmigen Rändern (32, 33) versehen ist, die eine enge Passung mit dem Außendurchmesser eines an dem Verbindungsblock (11) zu befestigenden zylindrischen Teils (3B, 5B) bilden.

7. Verfahren zum Konstruieren eines Brenners (1), der einen mittigen Kanal (2) und mindestens einen koaxialen Kanal (6), der den mittigen Kanal (2) umgibt, aufweist,
wobei die Kanäle (2, 6) von einer stromaufwärtigen Zufuhrseite zu einem stromabwärtigen Austrittsende führen,
wobei der mittige Kanal (2) und der koaxiale Kanal (6) durch eine innere und eine äußere konzentrische Wand (3, 5) definiert werden, welche freie stromabwärtige äußere Enden aufweisen, die profiliert sind, um einen ringförmigen Schlitz (10) zu definieren, der ein Austrittsende des koaxialen Kanals (6) bildet und in Richtung eines benachbarten Austrittsendes des mittigen Kanals (2) konvergiert,
wobei ein Verbindungsblock (11) mit einer mittigen Öffnung (13), die derart angeordnet ist, dass sie mit dem mittigen Kanal (2) in einer Linie ist, und einer kreisförmigen Anordnung von Öffnungen (12), die derart angeordnet sind, dass sie mit dem koaxialen Kanal (6) in einer Linie sind, versehen ist,
**dadurch gekennzeichnet, dass** eine Seite des Verbindungsblocks (11) an die äußeren Enden der koaxial angeordneten stromaufwärtigen Teile der inneren und der äußeren Wand (3A, 5A) geschweißt wird, und
dadurch, dass die stromabwärtigen Teile der inneren Wand (3B) und danach der äußeren Wand (5B) an die zweite Seite des Verbindungsblocks (11) in einer Linie mit den entsprechenden stromaufwärtigen Teilen geschweißt werden.

8. Verfahren nach Anspruch 7, wobei nach dem Schweißen des stromaufwärtigen Teils der äußeren Wand (5A) an den Verbindungsblock (11) zwei umgebende Gehäuse (15A, 16A) an den Block geschweißt werden, um zwei konzentrische Kammern (17A, 18A) eines Kühlmantels (14) zu bilden, wobei der Verbindungsblock (11) mit zwei konzentrischen kreisförmigen Anordnungen von Öffnungen (20) in einer Linie mit den Kühlmantelkammern (17A, 18A) versehen ist.

9. Verfahren nach Anspruch 8, wobei stromabwärtige Kühlmantelkammern (17B, 18B) durch einen doppelwandigen zylindrischen Körper (14B) bereitgestellt werden, wobei die äußere (16B) seiner doppelten Wände die stromaufwärtige Kante der inneren Wand (15B) über den gesamten Umfang nicht abgedeckt lässt, wobei der Körper (14B) an seiner stromabwärtigen Seite durch eine vordere Fläche (21) abgedeckt wird, wobei die vordere Fläche (21) eine Kante (22) aufweist, die eine mittige Öffnung (23) definiert und an die Kante der äußeren Wand (5) angrenzt, wobei der Raum (18B) zwischen den doppelten Wänden (15B, 16B) des zylindrischen Körpers (14B) in offener Verbindung mit einer der stromaufwärtigen Kühlmantelkammern (18A) und, nahe der Öffnung (23) in der vorderen Fläche (21), mit dem Raum (17B), den er um die äußere Kanalwand (5B) herum umgibt, ist, der Raum (17B) seinerseits in offener Verbindung mit der anderen stromaufwärtigen Kühlmantelkammer (17A) ist, und wobei nach dem Schweißen der inneren (15B) der doppelten Wände des zylindrischen Körpers an den Verbindungsblock (11) eine ringförmige Abdeckplatte in mindestens zwei getrennten C-förmigen Teilen (34) an den Verbindungsblock (11) und an den zylindrischen Körper (14B) geschweißt wird, um den Zwischenraum zwischen der äußeren der doppelten Wände und dem Verbindungsblock (11) zu verschließen.

## Revendications

1. Brûleur (1) comprenant un canal central (2) et au moins un canal coaxial (6) entourant le canal central,
les canaux allant d'un côté amont d'alimentation à une extrémité aval d'éjection, le canal central (2) et le canal coaxial (6) étant définis par des parois intérieure et extérieure concentriques (3, 5) ayant des extrémités extérieures aval libres profilées pour définir une fente annulaire (10) formant une extrémité d'éjection du canal coaxial (6) et convergeant vers une extrémité d'éjection adjacente du canal central (2),
dans lequel un bloc de connexion (11) coupe au moins le canal coaxial (6), le bloc (11) reliant les parois extérieure et intérieure (3, 5) et étant pourvu d'un ou plusieurs orifices (12) en alignement avec les parties de canal correspondantes des deux côtés du bloc (11) et
**caractérisé en ce que** le bloc de connexion (11) coupe les parois intérieure et extérieure (3, 5) en divisant les deux parois en deux parties (3A, 3B ; 5A, 5B), et dans lequel, pour les deux parois, les deux parties sont reliées au bloc de connexion (11) en alignement l'une avec l'autre.

2. Brûleur selon la revendication 1, dans lequel la paroi extérieure (5) est entourée par une chemise de refroidissement (14) et dans lequel le bloc de connexion (11) s'étend sur la largeur de la chemise de refroidissement en laissant des orifices de passage (20) pour l'écoulement d'un réfrigérant.

3. Brûleur selon la revendication 2, dans lequel la chemise de refroidissement (14) comprend deux compartiments de chemise coaxiaux (17A, 18A) en connexion ouverte l'un avec l'autre près de l'extrémité d'éjection, tandis qu'à leur autre extrémité un des compartiments de chemise (17A) est raccordé à une alimentation de réfrigérant et l'autre compartiment (18A) est raccordé à une évacuation de réfrigérant et dans lequel le bloc de connexion (11) coupe les deux compartiments de chemise (17A, 18A) et est pourvu d'orifices de passage (20) pour l'écoulement d'un réfrigérant.

4. Brûleur selon l'une quelconque des revendications précédentes, dans lequel la distance entre l'extrémité extérieure de la paroi intérieure (3) et le côté aval du bloc de connexion (11) représente environ 1 à 3 fois le diamètre du bloc de connexion (11).

5. Brûleur selon l'une quelconque des revendications précédentes, dans lequel au moins un des côtés du bloc de connexion est pourvu d'une ou plusieurs saillies concentriques (31) dans une configuration en paliers, chacune d'un diamètre correspondant à une des parois concentriques (3A, 5A) attachées au bloc de connexion (11).

6. Brûleur selon l'une quelconque des revendications précédentes, dans lequel au moins un côté du bloc de connexion (11) est pourvu d'un ou plusieurs rebords circulaires (32, 33) formant un ajustement serré avec le diamètre extérieur d'une partie cylindrique (3B, 5B) devant être attachée au bloc de connexion (11).

7. Procédé de construction d'un brûleur (1) comprenant un canal central (2) et au moins un canal coaxial (6) entourant le canal central (2),
les canaux (2, 6) allant d'un côté amont d'alimentation à une extrémité aval d'éjection,
le canal central (2) et le canal coaxial (6) étant définis par des parois intérieure et extérieure concentriques (3, 5) ayant des extrémités extérieures aval libres profilées pour définir une fente annulaire (10) formant une extrémité d'éjection du canal coaxial (6) et convergeant vers une extrémité d'éjection adjacente du canal central (2),
un bloc de connexion (11) étant pourvu d'un orifice central (13) agencé pour être en alignement avec le canal central (2) et d'un réseau circulaire d'orifices (12) agencés pour être en alignement avec le canal coaxial (6),
**caractérisé en ce qu'**un côté du bloc de connexion (11) est soudé aux extrémités extérieures des parties amont positionnées coaxialement des parois intérieure et extérieure (3A, 5A), et
**en ce que** les parties aval de la paroi intérieure (3B) et ensuite de la paroi extérieure (5B) sont soudées au deuxième côté du bloc de connexion (11) en alignement avec les parties amont correspondantes.

8. Procédé selon la revendication 7 dans lequel, après le soudage de la partie amont de la paroi extérieure (5A) au bloc de connexion (11), deux enveloppes périphériques (15A, 16A) sont soudées au bloc pour former deux compartiments concentriques (17A, 18A) d'une chemise de refroidissement (14), le bloc de connexion (11) étant pourvu de deux réseaux circulaires concentriques d'orifices (20) en alignement avec les compartiments (17A, 18A) de la chemise de refroidissement.

9. Procédé selon la revendication 8, dans lequel des compartiments aval (17B, 18B) de la chemise de refroidissement sont pourvus d'un corps cylindrique à double paroi (14B) avec l'extérieur de ses doubles parois (16B) laissant le bord amont de la paroi intérieure (15B) découvert sur le périmètre entier, le corps (14B) étant coiffé d'une face avant (21) sur son côté aval, la face avant (21) ayant un bord (22) définissant un orifice central (23) et jouxtant le bord de la paroi extérieure (5), l'espace (18B) entre les doubles parois (15B, 16B) du corps cylindrique (14B) étant en connexion ouverte avec un des compartiments amont (18A) de la chemise de refroidissement et, près de l'orifice (23) dans la face avant (21), avec l'espace (17B) qu'il entoure autour de la paroi extérieure (5B) du canal, l'espace (17B) étant à son tour en connexion ouverte avec l'autre compartiment amont (17A) de la chemise de refroidissement, et dans lequel, après le soudage de l'intérieur des doubles parois du corps cylindrique (15B) au bloc de connexion (11), une plaque de recouvrement annulaire en au moins deux parties en forme de C séparées (34) est soudée au bloc de connexion (11) et au corps cylindrique (14B) pour fermer l'interstice entre l'extérieur des doubles parois et le bloc de connexion (11).
